# EUROPÄISCHE PATENTSCHRIFT

(11) **EP 2 871 738 B1**
(45) Veröffentlichungstag und Bekanntmachung des Hinweises auf die Patenterteilung: **28.02.2018**
(21) Anmeldenummer: 14003564.3
(22) Anmeldetag: 17.10.2014
(51) Int. Cl.: H02G 3/30, H02G 11/00

(54) **Leitungsführungsvorrichtung**
Conduit guide device
Dispositif de guidage de conduite

(30) Priorität: 12.11.2013 DE 102013018888; 24.09.2014 DE 102014013845
(43) Veröffentlichungstag der Anmeldung: 13.05.2015
(73) Patentinhaber: Knopp-Fördertechnik, 56412 Niederelbert (DE)
(72) Erfinder: Knopp, Hans Werner, 56412 Großholbach (DE)
(74) Vertreter: Preusche, Rainer

(56) Entgegenhaltungen:
- DE-A1-102006 034 303
- DE-A1-102007 041 663
- DE-U1- 7 811 316
- DE-U1- 8 221 083
- US-A- 3 473 769
- US-A- 5 411 443
- US-B1- 6 930 244

## Beschreibung

Die vorliegende Erfindung bezieht sich auf eine Vorrichtung zum Führen von Leitungen nach dem Oberbegriff des Anspruches 1. Derartige Vorrichtungen sind aus dem Stand der Technik bekannt. So gibt es beispielsweise Leitungsführungskanäle, welche Leitungen zwischen zwei Maschinen bzw. zwei Maschinenteilen über gelenkig miteinander verbundene Glieder führen, um eine möglichst hohe Bewegungsfreiheit der darin geführten Leitungen zu gewährleisten. Es hat sich jedoch in jüngerer Zeit herausgestellt, dass durch diese mehrgliedrige Ausbildung der Leitungsführungskanäle diese nur kostspielig und zeitaufwändig zu reinigen sind, insbesondere bei einer Verwendung im Lebensmittelbereich, wo hohe hygienische Standards herrschen. Durch die mehrgliedrige Ausbildung bekannter Leitungsführungskanäle werden zwischen den Gliedern schlecht zu reinigende Ablageflächen für Staub und Fasern bedingt, so dass eine Verunreinigung der zu bearbeiten Lebensmittel zwangsläufig folgt. Siehe zum Beispiel US-B-6930244.

Der vorliegenden Erfindung liegt daher die Aufgabe zugrunde, eine Vorrichtung zum Führen von Leitungen bereitzustellen, welche leicht zu reinigen und zu desinfizieren ist. Ferner ist es Aufgabe der vorliegenden Erfindung eine Vorrichtung bereitzustellen, welche eine einfache (De-)Montage der Leitungen ermöglicht und welche kostengünstig herstellbar ist.

Dies wird erfindungsgemäß durch eine Vorrichtung nach den unabhängigen Ansprüchen 1 und 9 erreicht. Vorteilhafte Ausführungsformen und Weiterbildungen sind Gegenstand der Unteransprüche.

Der Kerngedanke der vorliegenden Erfindung ist, dass die Vorrichtung zum Führen von Leitungen, insbesondere im Lebensmittelbereich, mit wenigstens einem bandartigen Träger, welcher als lösbare Verbindung zwischen zwei Halteelementen, bevorzugt maschinellen Anlagen, anordbar ist bzw. angeordnet werden kann und weiterhin wenigstens einen stegartigen an dem Träger angeordneten Abschnitt zum beweglichen Halten von Leitungen umfasst, welcher sich im Wesentlichen quer zu einer Längsrichtung des Trägers erstreckt und welcher wenigstens eine sich in Längsrichtung des Trägers erstreckende durchgängige Öffnung umfasst, durch welche wenigstens eine Leitung durchführbar ist.

"Bandartig" bedeutet dabei, dass der Träger langgezogen ist, also eine Längserstreckung aufweist, welche um ein Vielfaches größer ist als eine Quererstreckung oder eine Höhe und dass der Träger biegsam ist. Im Wesentlichen quer bedeutet dabei, dass der stegartige Abschnitt in einem Bereich von - 20° bis + 20°, bevorzugt - 10° bis + 10°, um die Querrichtung herum angeordnet ist.

Die Form ist aufgrund ihrer Bandartigkeit veränderbar. Auf diese Weise lässt sie sich bei einer Bewegung der Halteelemente zueinander leicht verändern, ohne eine Leitungsführung zu stören. Des Weiteren ermöglicht die bandartige Form beispielsweise das Weglassen von Scharnieren und eine bessere Reinigung.

Bei einer weiteren vorteilhaften Ausführungsform ist der wenigstens eine Träger flexibel und/oder biegsam, bevorzugt scharnierfrei und/oder kanalfrei ist, besonders bevorzugt derart, dass er unter Aufspannung eines Bogens anordbar ist. Dies ist vorteilhaft, um die Vorrichtung leicht und effektiv zu reinigen, beispielsweise mit einem Dampfstrahler. Bevorzugt ist unter flexibel zu verstehen, dass der Träger aus einem flexiblen Material besteht. Unter flexibel ist dabei ein elastisches Material zu verstehen. Bevorzugt ist der Träger biegsam. Unter Biegsamkeit ist die Veränderbarkeit der Form zu verstehen. Dies kann also beispielsweise folienartig oder elastisch bedeuten. Besonders bevorzugt ist der Träger unter Aufspannung eines Bogens anordbar. Dabei ist denkbar, dass der Träger über eine ausreichende Steifigkeit verfügt, um beispielsweise in einer Bogenform Leitungen zu führen, ohne zu einer Befestigung an den Halteelementen zusätzliche Stützelemente zur Stabilisierung einer Form des Trägers zu benötigen. Die Bogenform ist in einer Ausführungsform nach oben, in einer anderen nach unten gerichtet. Auch verdrillte Formen oder andere beliebige Formen sind denkbar. Der Vorteil dieser Formen ist eine hohe Variabilität der Einsatzmöglichkeiten bei gleichzeitig einfacher Hygiene und einfacher Fertigbarkeit. Bevorzugt ist der wenigstens eine Träger nicht verdrillbar. Dies ist vorteilhaft, da auf diese Weise eine Belastung der geführten Leitungen vermieden wird, was bei einer Bewegung senkrecht zur Längsrichtung des Trägers besonders stark wäre.

Bei einer weiteren vorteilhaften Ausführungsform umfasst der Träger mehrere stegartige Abschnitte, welche auch als Querstege bezeichnet werden. In Längsrichtung des bandartigen Trägers sind bevorzugt 2 bis 20, mehr bevorzugt 3 bis 15 und meist bevorzugt 5 bis 12 stegartige Abschnitte angeordnet. Dies ermöglicht eine sehr stabile Leitungsführung, bei der die Leitungen nicht herunterfallen und gleichzeitig eine hohe Bewegbarkeit der Leitungen in den Öffnungen aufrechterhalten wird.

Bei einer weiteren vorteilhaften Ausführungsform sind der wenigstens eine Träger sowie der wenigstens eine stegartige Abschnitt fest aneinander fixiert, wobei die Fixierung vorteilhaft mittels Verklebung, bevorzugter als Druckschweißverbindung, meist bevorzugt als nicht-lösbare homogene Verschweißung, weiterhin meist bevorzugt als Hochfrequenzschweißverbindung, ausgebildet ist.

Die Verklebung ist insbesondere vorteilhaft durch Schmelzkleber oder Heißklebefolie ausgebildet. Denkbar ist allgemein eine Fixierung mittels Verschweißung. Meist bevorzugt ist die Fixierung als nicht-lösbare homogene Verschweißung ausgebildet, welche weiterhin meist bevorzugt durch Hochfrequenzschweißen ausgebildet ist. Es ist vorteilhaft, dass die Verschweißung durch Erwärmung, bevorzugt durch Hochfrequenz, wenigstens des Trägers und/oder des stegartigen Abschnitts ausgebildet ist. Insbesondere durch die Hochfrequenzverschweißung weist die resultierende Fixierung von bandartigem Träger und stegartigem Abschnitt aneinander eine hohe Schweißnahtfestigkeit und/oder eine hohe Schweißnahtqualität und/oder eine hohe Belastbarkeit auf, wobei hingegen nur ein geringer Energieaufwand für die Ausbildung der Fixierung bedingt ist. Somit erweist sich die Vorrichtung als kostengünstig in der Herstellung und langlebig. Ferner ist denkbar, dass die Verschweißung (zusätzlich) chemisch und/oder mittels Ultraschall ausgebildet ist.

Bei einer weiteren vorteilhaften Ausführungsform umfassen die Querstege mehrere Öffnungen zur Durchführung von Leitungen, wobei bevorzugt 2 bis 50 Öffnungen, mehr bevorzugt 3 bis 40 Öffnungen und meist bevorzugt 4 bis 15 Öffnungen vorgesehen sind. Auf diese Weise können mehrere Kabel vorteilhaft nebeneinander durch verschiedene Öffnungen geführt werden, ohne sich gegenseitig durch Reibung aneinander bei Bewegung der Vorrichtung zu stören. Denkbar ist fernerhin, dass die Querstege eine die Leitungen beabstandende Wirkung haben. Dies ist vorteilhaft, da auf diese Weise bei elektrischen Leitungen eine zusätzliche Isolationswirkung erzielt werden kann.

Bei einer weiteren vorteilhaften Ausführungsform sind die umlaufenden Kanten der wenigstens einen Öffnung abgeschrägt ausgebildet, wobei die abgeschrägten Kanten der wenigstens einen Öffnung bevorzugt einen Winkel von 0,5° bis 90°, mehr bevorzugt einen Winkel von 5° bis 50° und meist bevorzugt einen Winkel von 5° bis 20° zur Längsrichtung des Trägers aufweisen, sodass bei Bewegung der Vorrichtung durch Bewegung der Halteelemente zusätzlich ein Materialabrieb verhindert wird. Bei einer weiteren vorteilhaften Ausführungsform weisen die abgeschrägten Kanten der wenigstens einen Öffnung bevorzugt einen Winkel von 0,5° bis 90°, mehr bevorzugt einen Winkel von 5° bis 50° und meist bevorzugt einen Winkel von 5° bis 20° zur Längsrichtung des Trägers auf. Es hat sich gezeigt, dass mit dieser Abschrägung die durch die Öffnung hindurchzuführenden Leitungen leichter einführbar sind und deren Abnutzung deutlich vermindert werden kann.

Bei einer weiteren vorteilhaften Ausführungsform sind die stegartigen Abschnitte zumindest teilweise unterbrochen ausgebildet. Bevorzugt entspricht die Anzahl der Unterbrechungen der Anzahl der vorgesehenen Öffnungen, durch welche die Leitungen hindurchführbar sind. Weiterhin bevorzugt sind die teilweisen Unterbrechungen der stegartigen Abschnitte spaltartig ausgebildet. Die ist vorteilhaft, da durch die spaltartige Ausbildung der Unterbrechung die zu führenden Leitungen durch Druckbeaufschlagung leicht in die jeweilige Öffnung einführbar und durch Zugbeaufschlagung wieder leicht aus dieser entnehmbar sind. Es ist folglich vorteilhaft, derartige spaltartige Unterbrechungen vorzusehen, um einen leichten Austausch der Leitungen zu ermöglichen. Bevorzugt sind die spaltartigen Unterbrechungen in ihrem Durchmesser kleiner ausgebildet als die Durchmesser der hindurchzuführenden Leitungen. Dies ist vorteilhaft, da somit einmal eingeführte Leitungen nicht während der Bewegung wieder aus den Öffnungen herausspringen können. Denkbar ist fernerhin, dass dehnbare Öffnungen ausgebildet werden. Dies ist vorteilhaft, um Kabel leichter einzuführen.

Bei einer weiteren vorteilhaften Ausführungsform umfasst das Material der Vorrichtung wenigstens ein Elastomer, bevorzugt ausgebildet als Blockcopolymer und/oder als Elastomerlegierung und meist bevorzugt als Polymer auf Polyurethanbasis. Unter Elastomerlegierungen sind dabei Zusammenmischungen von fertigen Polymeren zu verstehen, sodass der Kunststoff aus mehreren Molekülsorten besteht.

In einer anderen vorteilhaften Ausführungsform umfasst der Träger anstelle des stegartigen Elements ganz allgemein mindestens ein mit dem Träger verbundenes Führungselement zum Halten mindestens einer über den Träger geführten Leitung. Unter einem Führungselement ist dabei ein beliebiges Befestigungselement zu verstehen, dass dazu geeignet ist, Leitungen entlang des Trägers zu führen und zu befestigen. Denkbar ist zum Beispiel ein an dem Träger befestigter Haken, in den die Leitung eingehängt werden kann. Ferner sind auch aus dem Stand der Technik bekannte Führungsclips geeignet, wie sie zum Beispiel zum Führen einer Telefonleitung um einem Türrahmen Verwendung finden. Auf diese Weise werden in vielfältigen Bauformen die Vorteile der Anordnung mit einem bandartigen Träger aufrechterhalten.

Bevorzugt weist der Träger in einer zur Längsrichtung senkrechten Ebene ein rechteckiges Profil auf, wobei die Längen des Rechtecks vorteilhaft unterschiedlich sind, wobei die größere Länge in einer bevorzugten Ausführungsform mit der Erstreckungsrichtung des stegartigen Abschnitts übereinstimmt.

Der Begriff Halteelemente umfasst dabei beliebige Elemente, zwischen und/oder mittels denen Kabel geführt werden müssen. Beispielsweise können dies zwei Rahmenelemente eines Förderbandes sein. In einer anderen Ausführungsform sind es zwei Wände. Oder eine Wand und eine maschinelle Anlage. In einer anderen Ausführungsform kann die maschinellen Anlagen sich bewegen. Denkbar ist auch, dass das Kabel zwischen zwei maschinellen Anlagen geführt wird. Durch die bandartige Form des Trägers wird eine homogene bewegliche Form erzielt, die besonders leicht zu reinigen ist.

Die Erfindung umfasst ferner die Verwendung einer in dieser Patentanmeldung beschriebenen Vorrichtung zum Führen von Leitungen als Leitungsführungsvorrichtung zwischen zwei oder mehreren Halteelementen, Maschinen und/oder Maschinenteilen.

Weiter bevorzugt erstreckt sich der stegartige Abschnitt in der gesamten Breite des Trägers, so dass die Seitenenden bündig abschließen. In einer vorteilhaften Ausführungsform ist ein stegartiger Abschnitt dabei ein von einer Fläche eines bandartigen Trägers hervorstehender Vorsprung. Bevorzugt ist dieser in Vorsprungsrichtung dicker ausgebildet als in einer Stegbreite in Längsrichtung des Trägers.

Ferner umfasst der stegartige Abschnitt wenigstens eine sich in Längsrichtung des Trägers erstreckende durchgängige Öffnung, durch welche wenigstens eine Leitung hindurchführbar ist. Dies ist vorteilhaft, da somit die erfindungsgemäße Vorrichtung zum Führen von Leitungen wenigstens eine Leitung aufnimmt, diese beweglich hält und nicht starr fixiert. Dies ist insbesondere vorteilhaft, wenn die zwei Halteelemente, welche der Träger miteinander verbindet, in unterschiedliche Bewegungsrichtungen laufen, so dass eine Linearbewegung oder auch eine Drehbewegung ermöglicht werden. Bevorzugt ist die durch die wenigstens eine durchgängige Öffnung hindurchführbare Leitung von dem Träger durch den stegartigen Abschnitt beabstandet angeordnet. Bevorzugt ist die wenigstens eine Leitung im durchgeführten Zustand durch die wenigstens eine Öffnung im Wesentlichen parallel zu dem Träger angeordnet. Dies ist vorteilhaft für schnelle und flexible Bewegungen der Halteelemente.

Je nach Ausführung sind im einfachsten Fall die stegartigen Abschnitte gleichmäßig voneinander beabstandet. Allerdings kann der Abstand der stegartigen Abschnitte zueinander auch variieren, so dass manche Abschnitte näher aneinander und andere Abschnitte weiter voneinander entfernt auf dem bandartigen Träger angeordnet sind.

Der stegartige Abschnitt weist in einer zur Längsrichtung des Trägers orthogonal gerichteten Ebene bevorzugt eine rechteckige Querschnittsform auf, wobei die Erstreckungsrichtung der rechteckigen Querschnittsform vorteilhaft größer ist als die sich von dem Träger emporhebende Höhe der rechteckigen Querschnittsform des stegartigen Abschnitts.

Vorteilhaft sind die Öffnungen in dem stegartigen Abschnitt quer zur Längsrichtung des Trägers nebeneinander angeordnet. In einer anderen Ausführungsform sind die Öffnungen übereinander von dem Träger beabstandet in dem stegartigen Abschnitt angeordnet. Auf diese Weise wird Platz in der Querrichtung gespart. Auch Kombinationen sind möglich. Fernerhin ist denkbar, dass die Öffnungen gleich groß sind und die gleiche Form aufweisen. Es ist jedoch auch möglich, dass die Öffnungen unterschiedliche Größen und/oder unterschiedliche Formen aufweisen. In der einfachsten Variante weist jeweils ein stegartiger Abschnitt lediglich eine Öffnung auf, welche bevorzugt rechteckig oder dreieckig oder elliptisch und mehr bevorzugt rechteckig mit abgerundeten Ecken, ausgebildet ist. Dies ist vorteilhaft, da durch diese rechteckige Öffnung die Leitungen leicht und einfach hindurchführbar sind und durch die abgerundeten Ecken der Öffnung Kabelabrieb und Materialverschleiß vermieden werden. Vorteithaft ist diese Öffnung derart ausgebildet, dass sie mehrere Leitungen aufnehmen kann. In einer anderen Ausführungsform ist die wenigstens eine Öffnung rund oder elliptisch ausgebildet. Bevorzugt weist sie abgeschrägte Kanten auf.

Umfasst der stegartige Abschnitt mehrere Öffnungen, so sind diese bevorzugt durch Abstandhalterelemente voneinander getrennt. Dies ist vorteilhaft, da durch die Abstandhalterelemente ein direkter Kabel an Kabel-Abrieb verhindert wird und die Leitungen schonender und kontrollierter und geordneter geführt werden können. Bevorzugt weisen auch derartige Öffnungen abgeschrägte Außenkanten auf, so dass zusätzlicher Leitungsverschleiß vermieden wird.

Die oben genannten Unterbrechungen befinden sich bevorzugt zwischen je einer Öffnung und einem von dem Träger am weitest beabstandeten Ende eines stegartigen Abschnittes. Auf diese Weise eignet sich eine solche Unterbrechung, insbesondere in Spaltform, sehr gut für das Einführen von Leitungen, die durch die Vorrichtung geführt werden sollen. Bevorzugt kann die Unterbrechung gedehnt werden, besonders bevorzugt über einen Querschnitt eines Leitungskabels hinaus. Dies ist vorteilhaft, da auf diese Weise auch dickere Kabel durch eine kleine Unterbrechung eingeführt werden können.

Denkbar ist fernerhin, dass der wenigstens eine stegartige Abschnitt wenigstens ein Abstandhalterelement, welche zwei nebeneinander angeordnete Öffnungen voneinander beabstandet, und welche bevorzugt T-förmig ausgebildet ist, umfasst. Durch eine Verjüngung in Richtung des bandartigen Trägers ist Abstandhalterelement biegsam und beweglich ausgebildet ist, so dass die Leitungseinführung/Leitungsabführung in die jeweiligen Öffnungen zusätzlich erleichtert wird.

Denkbar ist, das die Vorrichtung zum Führen von Leitungen einteilig ausgebildet ist. Vorteilhaft sind der wenigstens eine bandartige Träger sowie der wenigstens eine stegartige Abschnitt fest aneinander fixiert.

Dabei ist die Ausbildung der Vorrichtung nicht auf die hier bevorzugte unlösbare Fixierung beschränkt. So ist beispielsweise denkbar, dass der wenigstens eine stegartige Abschnitt lösbar von dem bandartigen Träger ausgebildet ist und somit je nach Bedarfsfall der Anzahl der zu führenden Leitungen anpassbar sind. Hierzu ist es vorteilhaft, dass die stegartigen Abschnitte beispielsweise über Führungsnuten und/oder Rast- und/oder Klick- und/oder Steckmechanismen an dem bandartigen Träger lösbar befestigbar sind.

In der oben genannten anderen Variante der Vorrichtung ist das Führungselement vorteilhaft eine Halteklammer. Denkbar ist auch Kabelbinder. In einer Ausführungsform umfasst der Träger zwei dicht nebeneinander beabstandete Öffnungen, durch die ein Kabel mittels Befestigungsmittel, bevorzugt mittels Kabelbinder, gehalten wird. In einer anderen Ausführungsform ist das mindestens eine Halteelement als Haltering ausgebildet. Denkbar sind auch bekannte Kabelführungsclips, die an dem Träger befestigt sind.

Denkbar ist, dass die Vorrichtung zur Führung von Leitungen metallfrei ausgebildet ist. Bevorzugt ist die Vorrichtung aus Kunststoff und/oder Verbundmaterial ausgebildet.

Bei einer weiteren vorteilhaften Ausführungsform umfasst das Material der Vorrichtung wenigstens ein Elastomer, bevorzugt ausgebildet als Blockcopolymer und/oder Elastomerlegierung und meist bevorzugt als Polymer auf Polyurethanbasis. Insbesondere die Ausbildung der Vorrichtung auf Polyurethanbasis ist vorteilhaft, da dieses Polymer der Vorrichtung eine hohe Flexibilität sowie Biegsamkeit verleiht. Ferner ist hierdurch die Bruchfestigkeit und/oder Schlagfestigkeit der Vorrichtung deutlich verbessert im Vergleich zu bekannten mehrgliedrigen Leitungsführungskanälen aus dem Stand der Technik.

Ferner ist denkbar, dass das Material weiterhin wenigstens einen Füllstoff umfasst. Ein derartiger Füllstoff kann beispielsweise als Pigment und/oder Additiv und/oder Partikel und/oder Faser und/oder einer Kombination hieraus umfassen. Pigmente erweisen sich vorteilhaft zur Farbgebung. Additive erweisen sich als vorteilhaft bezüglich der Materialeigenschaften wie Schlagzähigkeit, Bruchfestigkeit, Wärmeleitfähigkeit, Druckverformbarkeit oder Spannungsrelaxation zu verbessern.

Ferner ist denkbar, dass Füllstoffe den Materialabrieb verhindern. Zudem ist Material der Vorrichtung bevorzugt säurebeständig und/oder beständig gegenüber milchhaltigen und/oder fetthaltigen Nahrungsmitteln ausgebildet. Dies ist insbesondere bei der Verwendung der Vorrichtung im Lebensmittelbereich von Vorteil, da hier strenge Hygieneauflagen zu erfüllen sind.

Bei einer weiteren Variante sind die zu führenden Leitungen als Steuerleitungen und/oder Signalleitungen und/oder Versorgungsleitungen bevorzugt ein- und/oder mehradrig ausgebildet. Bevorzugt sind die Leitungen als Kabel, hydraulische Leitungen, pneumatische Leitungen, Schläuche oder Glasfasern ausgebildet. Vorteilhaft eignet sich die Vorrichtung für jegliche Art von Leitungen, welche zwischen 2 Halteelementen führbar sind.

Denkbar ist fernerhin, dass der bandartige Träger bevorzugt an seinen beiden freien Enden jeweils wenigstens eine, bevorzugt mehrere Öffnungen, durch welche eine lösbare Fixierung mittels geeigneter Befestigungsmittel des bandartigen Trägers mit einem jeweiligen Halteelement oder einer maschinellen Anlage erfolgt, umfasst. Im einfachsten Ausführungsbeispiel sind die Befestigungsmittel als Schrauben ausgebildet, so dass ein erstes freies Ende des bandartigen Trägers mit einem ersten Halteelement und das zweite freie Ende des bandartigen Trägers mit dem zweiten Halteelement lösbar verbindbar ist. Je nach Abstand der miteinander zu verbindenden Halteelementen ist die Länge des bandartigen Trägers variabel ausbildbar. Bevorzugt umfasst der Träger eine Länge zwischen 0.5 bis 5m. Weiterhin bevorzugt umfasst der Träger eine Breite zwischen 1 cm und 50 cm, mehr bevorzugt eine Breite zwischen 2 cm und 30 cm, meist bevorzugt eine Breite zwischen 5 cm und 15 cm.

Ferner ist denkbar, dass der Träger, wenn er gerade ausgerollt ist, eine Rechteckform bildet. Jedoch sind auch andere Formen denkbar. So ist der Träger in einer vorteilhaften Ausführungsform an seinen Enden breiter als in der Mitte. Damit wird der Träger vor allem an seiner Befestigungsstelle verstärkt, so dass eine Bogenaufspannung mehr Stabilität aufweist. Weiterhin weist der Träger bevorzugt eine Dicke zwischen 5 mm und 4 cm auf, mehr bevorzugt zwischen 6 mm und 2 cm, meist bevorzugt zwischen 7 mm und 1 cm. Denkbar ist eine konstante Dicke. In einer vorteilhaften Ausführungsform ist der Träger jedoch an seinen Enden dicker als in der Mittel.

Eine lösbare Fixierung des bandartigen Trägers an den jeweiligen Halteelementen erfolgt derart, dass die einseitig angeordneten stegartigen Abschnitte nach außen gerichtet angeordnet sind. Die ist vorteilhaft, da somit die führenden Leitungen an der Außenfläche leicht zugänglich sind und somit auch leicht austauschbar sind.

Denkbar ist, dass die Vorrichtung erweiterbar ausgebildet ist. Dies ist vorteilhaft, da somit mehrere Vorrichtungen aneinander anordbar sind, falls beispielsweise eine große Anzahl an Leitungen zwischen zwei Halteelementen verbunden anzuordnen. Für eine derartige Erweiterung sind bevorzugt Click-Systeme und/oder Rastsysteme vorteilhaft. So ist beispielsweise denkbar, dass der bandartige Träger einer ersten Vorrichtung eine zumindest teilweise umfangsseitige Nut und eine weitere Vorrichtung hingegen einen zumindest teilweise umfangsseitig angeordneten Vorsprung umfasst. Der Vorsprung ist hierbei bevorzugt zumindest teilweise in die komplementär hierzu ausgebildete Nut der ersten Vorrichtung einführbar und/oder fixierbar ausgebildet. Je nach Bedarf ist somit die Vorrichtung modular ausgebildet und beliebig auf die tatsächlich benötigte Anzahl an zu führenden Leitungen erweiterbar.

Es ist denkbar, dass die stegartigen Abschnitte in Bezug auf den bandartigen Träger geneigt ausgebildet sind. Bevorzugt entspricht die Neigung der stegartigen Abschnitte 30° bis 120°, mehr bevorzugt 70° bis 110° und meist bevorzugt 85° bis 95°. Diese Neigung erweist sich insbesondere im fixierten Zustand des bandartigen Trägers zwischen zwei Halteelementen als vorteilhaft, da somit zusätzlich die Leitungsführung nahezu abriebfrei ermöglicht wird. Die Höhe der stegartigen Abschnitte ist bevorzugt zwischen 1 cm und 7 cm, mehr bevorzugt zwischen 2 cm und 5 cm, meist bevorzugt zwischen 2,5 cm und 3,5 cm.

Vorteilhaft ist die hier beschriebene Vorrichtung zur Leitungsführung nebst allen Ausführungsvarianten zur Verwendung als Leitungsführungsvorrichtung zwischen zwei oder mehreren Halteelementen und/oder Maschinenteilen geeignet.

Bevorzugt ist die hier beschriebene Vorrichtung als Leitungsführungsvorrichtung ausgebildet.

Weitere Vorteile und Ausführungsformen ergeben sich aus den beigefügten Zeichnungen.

Darin zeigen:
- Fig. 1: eine perspektivische Ansicht einer montierten Vorrichtung;
- Fig. 2: einen schematischen Abschnitt einer montierten Vorrichtung;
- Fig. 3: eine schematische Darstellung einer weiteren Vorrichtung;
- Fig. 4: einen Abschnitt einer schematischen Darstellung einer Vorrichtung;
- Fig. 5: eine Seitenansicht einer weiteren Vorrichtung;
- Fig. 6: eine weitere perspektivische Abbildung eines Abschnittes einer Vorrichtung;
- Fig. 7: eine schematische Darstellung eines Abschnitts einer Vorrichtung;
- Fig. 8: eine schematische Darstellung eines Abschnitts einer Vorrichtung;
- Fig. 9: eine schematische Darstellung eines Abschnitts einer Vorrichtung;
- Fig. 10: eine schematische Darstellung eines Abschnitts einer Vorrichtung;
- Fig. 11a, 11b: Ansichten einer Vorrichtung im nichtmontierten Zustand;
- Fig. 12 a bis 12 c: schematische Beispiele eines Abschnitts einer Vorrichtung; und
- Fig. 13a, 13b: weitere schematische Beispiele eines Abschnitts einer Vorrichtung.

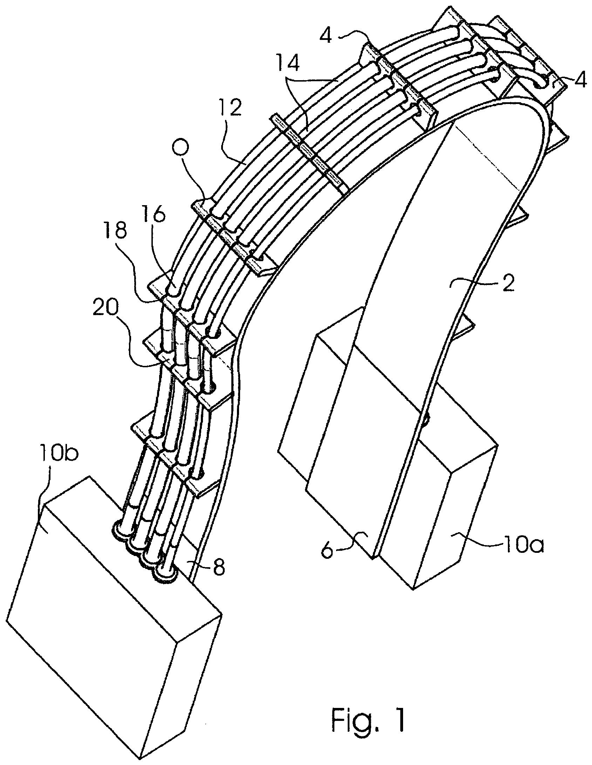

In Fig. 1 ist eine Vorrichtung 1 zum Führen von Leitungen mit einem bandartigen Trägerelement 2 sowie mehreren stegartigen Abschnitten 4 im montierten Zustand gezeigt. Hierzu sind die freien Enden 6, 8 des bandartigen Trägers 2 lösbar mit jeweils einer maschinellen Anlage 10a, 10b verbunden. Durch diese lösbare Fixierung wird der bandartige Träger 2 in einem gebogenen Zustand gehalten. An der nach außen gerichteten Oberfläche 12 des bandartigen Trägers 2 ist eine Vielzahl an stegartigen Abschnitten 4 angeordnet. Die stegartigen Abschnitte 4 dienen zur Aufnahme und Führung von Leitungen 14. In diesem Beispiel sind insgesamt 4 Leitungen 14 gezeigt, welche einen unterschiedlichen Durchmesser aufweisen.

Die Leitungen 14 sind durch die jeweiligen Öffnungen 16 der stegartigen Abschnitte 4 durchführbar. Zur vereinfachten Montage/Demontage der Leitungen in den öffnungen 16 sind die stegartigen Abschnitte 4 an deren Oberfläche O zumindest teilweise unterbrochen ausgebildet. Diese teilweise Unterbrechung ist bevorzugt als Spalt 18 vorgesehen. Die Öffnungen 16 der stegartigen Abschnitte sind durch Abstandshalter 20 voneinander beabstandet angeordnet. Zugleich erweisen sich die Abstandhalter 20 als vorteilhaft, da diese beweglich ausgebildet sind. So ist beispielsweise denkbar, dass zur Montage/Demontage der Leitungen 14 die Abstandhalterelemente 20 aus ihrer Grund/Ruheposition durch Kraftbeaufschlagung, beispielsweise durch Zug- und/oder Druckkraft ausgelenkt werden, so dass sich die benachbart angeordneten Spalte 18 derart vergrößern, dass die Leitungen 14 durch die geöffneten Spalte 18 leicht in die Öffnungen 16 ein-/ausführbar sind.

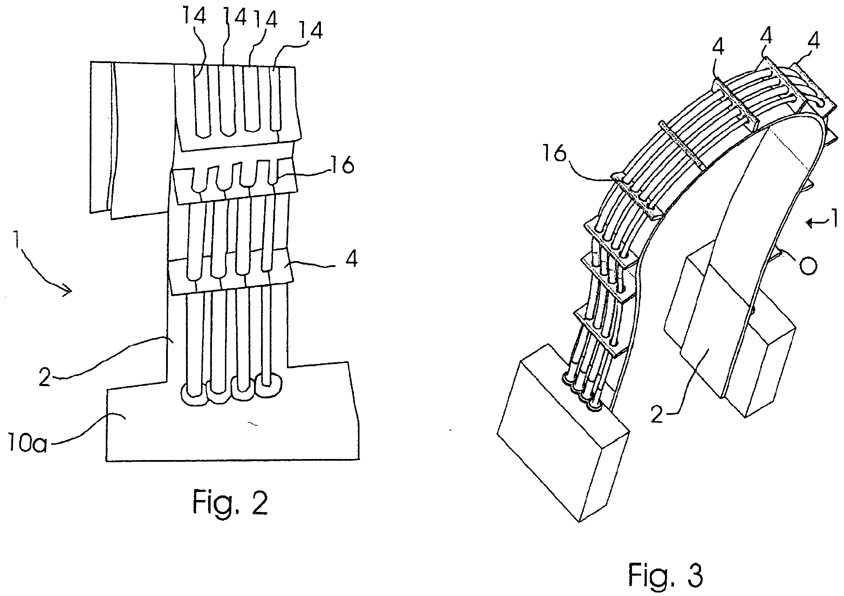

In Fig. 2 ist eine vergrößerte Ansicht der in Fig. 1 gezeigten Vorrichtung 1 dargestellt. Der bandartige Träger 2 ist mit seinem freien Ende 6 an einer maschinellen Anlage 10a lösbar fixiert und spannt einen Bogen auf. Die an der maschinellen Anlage angeordneten Leitungen 14 werden durch die Öffnungen 16 der stegartigen Abschnitte 4 derart geführt, dass sie im Wesentlichen parallel zu dem bandartigen Träger 2 angeordnet sind. Vorteilhaft sind die Öffnungen 16 vom Durchmesser größer ausgebildet als die durchzuführenden Leitungen 14, so dass diese eine gewisse Bewegungsfreiheit aufweisen. Dies ist insbesondere von Vorteil, wenn sich die beiden maschinellen Anlagen 10a, 10b gegengleich bewegen und der bandartige Träger 2 in seiner Krümmung K variiert. So wird Materialabrieb und -verschleiß verhindert.

Fig. 3 zeigt eine weitere Ausführungsform der Vorrichtung 1. Gleiche Bezugszeichen wie in den bisherigen Figuren entsprechen gleichen Bestandteilen und werden nicht erneut erklärt. Die hier gezeigte Vorrichtung 1 umfasst einen bandartigen Träger 2 sowie mehrere stegartige Abschnitte 4. Im Unterschied zu der in Fig. 1 dargestellten Vorrichtung 1, weisen hier die stegartigen Abschnitte 4 keine spaltartigen Unterbrechungen 18 an der Oberfläche O auf, sondern sind geschlossen ausgebildet. Bei dieser Ausführungsform werden die Leitungen 14 direkt durch die Öffnungen 16 hindurch geführt.

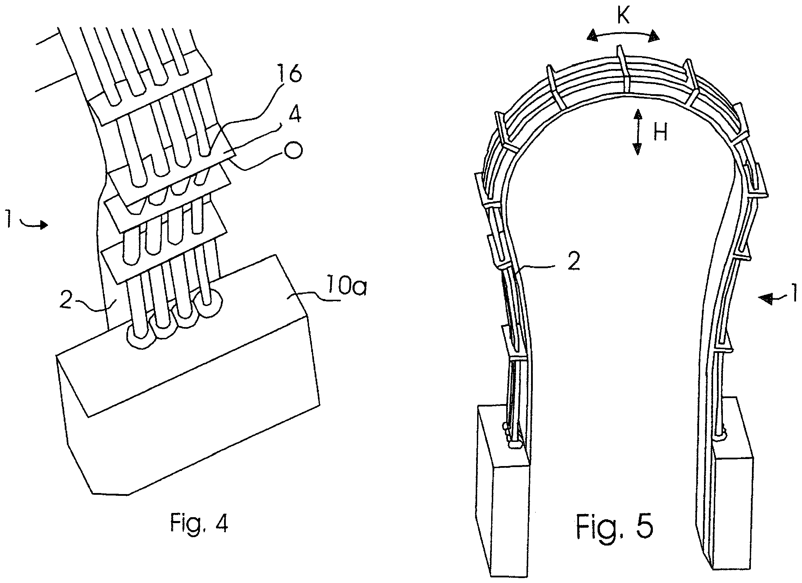

In Fig. 4 ist ein vergrößerter Abschnitt der Vorrichtung 1 der Fig. 3 gezeigt. Hier ist deutlich zu erkennen, dass die stegartigen Abschnitte 4 an der Oberfläche O durchgängig, also nicht unterbrochen, ausgebildet sind.

In Fig. 5 ist eine weitere Vorrichtung 1 im montierten Zustand gezeigt. Je nach Bewegung der beiden maschinellen Anlagen 10a, 10b ist die Krümmung K des bandartigen Trägers 2 sowie dessen Höhe H variabel und kann stärker und/oder schwächer ausgebildet sein.

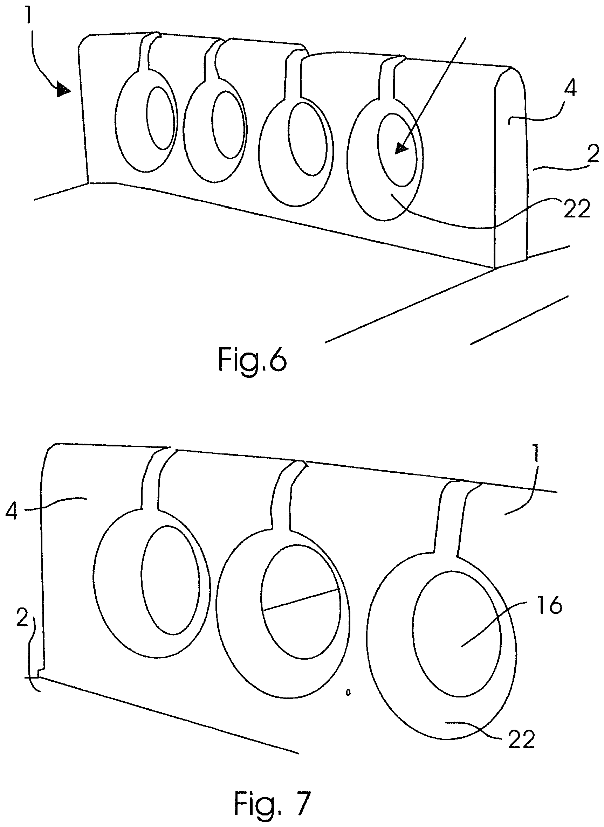

In Fig. 6 bis 9 sind räumliche Ansichten von Abschnitten einer Vorrichtung 1 gezeigt. Der bandartige Träger 2 ist hier im unmontierten Zustand gezeigt. Ein beispielhaft abgebildeter stegartiger Abschnitt 4 umfasst mehrere Öffnungen 16, durch welche Leitungen (nicht gezeigt) durchführbar sind. Besonders vorteilhaft hat sich erwiesen, die Kanten 22 der Öffnungen 16 abgeschrägt zuzusehen. Diese Abschrägung kann sowohl linear als auch gekrümmt ausgebildet sein. Durch diese abgeschrägten Kanten 22 ist die Leitungsführung verbessert und abriebfrei.

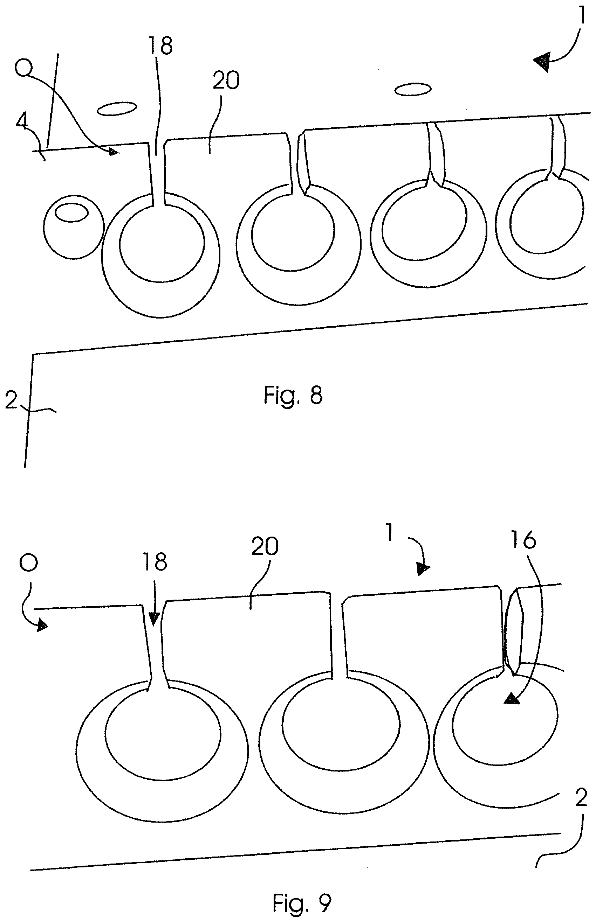

Insbesondere in Fig. 8 und 9 sind die Abstandshalterelemente 20 dargestellt, welche die Öffnungen 16 voneinander trennen. Durch die zumindest teilweise unterbrochene Oberfläche O des stegartigen Abschnitts 4 in Form von spaltartigen Unterbrechungen 18 kann eine einfache und schnelle (De-)Montage der Leitungen (nicht gezeigt) erfolgen. Die Abstandhalterelemente 20 sind durch ihre sich zum bandartigen Element 2 hin verjüngenden Zuläufe besonders biegsam und flexibel ausgebildet. Dies ermöglicht eine leichte und einfache Einführung bzw. Ausführung der Leitungen 14 (nicht gezeigt).

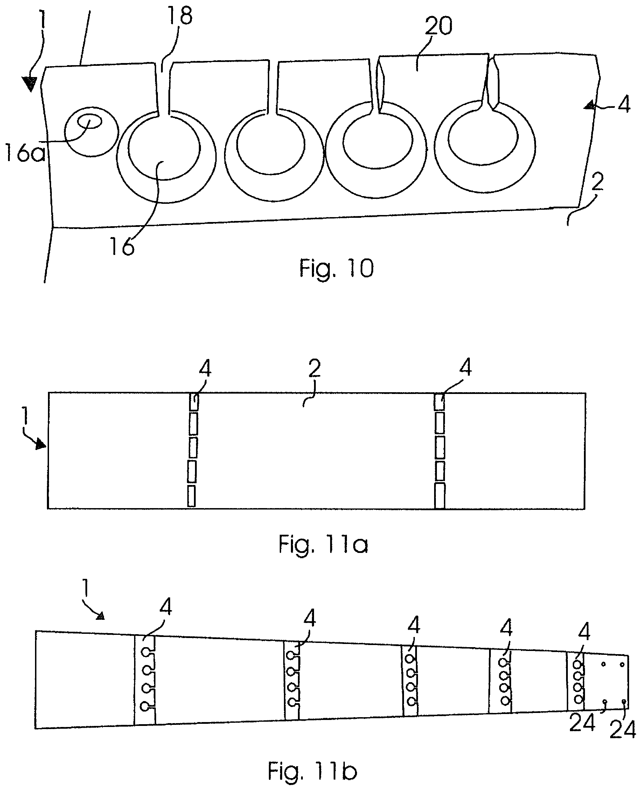

In Fig. 10 ist ein weitere Ausschnitt einer Vorrichtung 1 gezeigt, welcher sowohl spaltartige Unterbrechungen 18 des stegartigen Elements 4 als auch eine vollkommen geschlossene Öffnung 16a zeigt. Derartige Kombinationen sind beliebig ausbildbar. Auch die Durchmesser der Öffnungen sind variabel vorzusehen.

In Fig. 11a, 11b ist eine Vorrichtung 1 im unmontierten Zustand gezeigt. Der bandartige Träger 2 umfasst mehrere stegartige Abschnitte 4, welche hier im gleichen Abstand voneinander fest an dem Träger 2 fixiert sind. Jedoch sind auch hiervon abweichende Beabstandungen möglich. Vorteilhaft umfasst der bandartige Träger 2 an seinen freien Enden 6, 8 weitere Öffnungen 24, mittels welchen eine lösbare Befestigung des bandartigen Trägers 2 an der jeweiligen maschinellen Anlage (nicht gezeigt) erfolgt. Je nach Bedarf sind hierzu wenigstens eine, bevorzugt zwei bis 20 Öffnungen 24 vorgesehen.

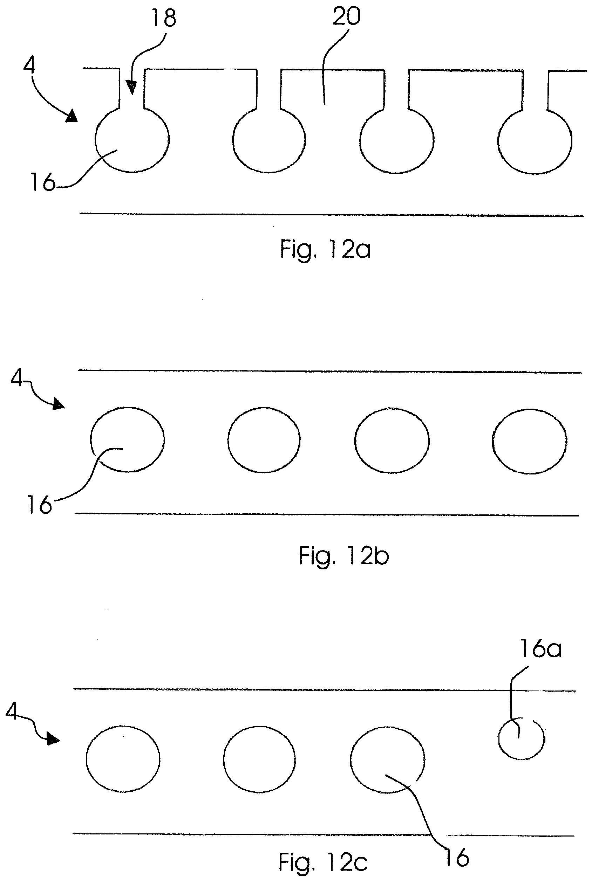

Fig. 12a - c zeigen weitere mögliche Ausführungsformen des stegartigen Abschnitts 4 mit den entsprechenden Öffnungen 16 (und 16a).

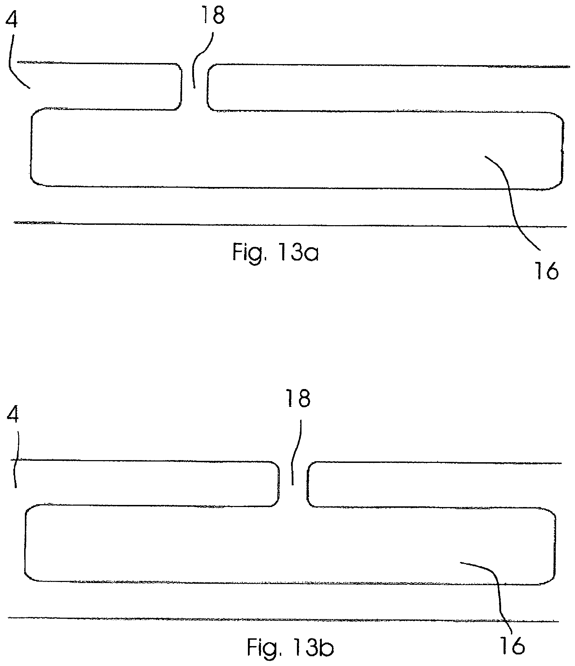

In Fig. 13a, 13b sind weitere Ausführungsbeispiele gezeigt, wie der stegartige Abschnitt 4 auch ausgebildet sein kann. So ist dargestellt, dass lediglich eine Öffnung 16 zur Aufnahme von mehreren Leitungen (nicht gezeigt) vorgesehen ist. Zur Vereinfachung der Einführung ist bevorzugt eine spaltartige Unterbrechung 18 vorgesehen, deren Position variabel anordbar ist. Daneben ist es hier auch denkbar, keine spaltartige Unterbrechung 18 vorzusehen.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: Träger
- 4: stegartiger Abschnitt
- 6, 8: freies Ende
- 10a, 10b: maschinelle Anlage
- 14: Leitung
- 16: Öffnung
- 18: spaltartige Unterbrechung; Spalt
- 20: Abstandhalterelement
- 22: abgeschrägte Kante
- 24: weitere Öffnung
- O: Oberfläche
- H: Höhe
- K: Krümmung

## Patentansprüche

1. Vorrichtung (1) zum Führen von Leitungen mit wenigstens einem bandartigen Träger (2) der als lösbare Verbindung zwischen zwei Halteelementen (10a, 10b) anordbar ist, wobei die Vorrichtung (1) weiterhin wenigstens einen stegartigen an dem Träger (2) angeordneten Abschnitt (4) zum beweglichen Halten von Leitungen, welcher sich im Wesentlichen quer zur Längsrichtung des Trägers (2) erstreckt und welcher wenigstens eine sich in Längsrichtung des Trägers (2) erstreckende durchgängige Öffnung (16) umfasst, durch welche wenigstens eine Leitung durchführbar ist, umfasst
**dadurch gekennzeichnet, dass**
der wenigstens eine Träger (2) und der wenigstens eine stegartige Abschnitt (4) mittels Verklebung und/oder Verschweißung fest aneinander fixiert sind .

2. Vorrichtung (1) zum Führen von Leitungen nach einem der vorhergehenden Ansprüche,
**dadurch gekennzeichnet, dass**
der wenigstens eine Träger (2) flexibel und/oder biegsam ist, bevorzugt scharnierfrei und/oder kanalfrei, besonders bevorzugt derart, dass er unter Aufspannung eines Bogens anordbar ist.

3. Vorrichtung (1) zum Führen von Leitungen nach einem der vorhergehenden Ansprüche,
**dadurch gekennzeichnet, dass**
der wenigstens eine Träger (2) mehrere stegartige Abschnitte (4) umfasst, die in Längsrichtung des bandartigen Trägers (2) voneinander beabstandet angeordnet sind, bevorzugt 2 bis 20, mehr bevorzugt 3 bis 15 und meist bevorzugt 5 bis 12.

4. Vorrichtung zum Führen von Leitungen nach einem der vorhergehenden Ansprüche,
**dadurch gekennzeichnet, dass**
der wenigstens eine Träger (2) sowie der wenigstens eine stegartige Abschnitt (4) fest aneinander fixiert sind.

5. Vorrichtung zum Führen von Leitungen nach einem der vorhergehenden Ansprüche,
**dadurch gekennzeichnet, dass**
der wenigstens eine stegartige Abschnitt (4) mehrere Öffnungen (16) zur Durchführung von Leitungen umfasst, wobei bevorzugt 2 bis 50 Öffnungen (16), mehr bevorzugt 3 bis 40 Öffnungen (16) und meist bevorzugt 4 bis 15 Öffnungen (16) vorgesehen sind.

6. Vorrichtung zum Führen von Leitungen nach einem der vorhergehenden Ansprüche,
**dadurch gekennzeichnet, dass**
die umlaufenden Kanten (22) der wenigstens einen Öffnung (16) abgeschrägt ausgebildet sind und bevorzugt einen Winkel von 0,5° bis 90° und besonders bevorzugt einen Winkel von 5° bis 20° aufweisen.

7. Vorrichtung zum Führen von Leitungen nach einem der vorhergehenden Ansprüche,
**dadurch gekennzeichnet, dass**
die stegartigen Abschnitte (4) zumindest teilweise unterbrochen ausgebildet sind, wobei die Anzahl der Unterbrechungen (18) bevorzugt der Anzahl der vorgesehenen Öffnungen (16), durch welche die Leitungen hindurchführbar sind, entspricht.

8. Vorrichtung zum Führen von Leitungen nach einem der vorhergehenden Ansprüche,
**dadurch gekennzeichnet, dass**
ihr Material wenigstens ein Elastomer, bevorzugt ausgebildet als Blockcopolymer und/oder Elastomerlegierung, umfasst.

9. Vorrichtung zum Führen von Leitungen nach Anspruch 8,
**dadurch gekennzeichnet, dass**
das Material wenigstens einen Füllstoff, ausgewählt aus einem Pigment zur Farbgebung, einem Additiv zur Verbesserung von Materialeigenschaften und einem Partikel umfasst.

10. Verwendung einer Vorrichtung (1) zum Führen von Leitungen gemäß einem der Ansprüche 1-8 als Leitungsführungsvorrichtung zwischen zwei oder mehreren Halteelementen (10a, 10b), Maschinen und/oder Maschinenteilen.

## Claims

1. Device (1) for guiding conduits with at least one band-like carrier (2), which can be arranged as a detachable connection between two holding elements (10a, 10b), wherein the device (1) further comprises at least one web-like section (4) arranged on the carrier (2) for movably holding conduits, which extends substantially transversely to the longitudinal direction of the carrier (2) and which comprises at least one continuous opening (16) extending in the longitudinal direction of the carrier (2), through which at least one conduit is passable,
**characterised in that**
the at least one carrier (2) and the at least one web-like section (4) are firmly fixed to one another by gluing or welding.

2. Device (1) for guiding conduits according to one of the preceding claims,
**characterised in that**
the at least one support (2) is flexible and/or bendable, preferably hinge-free and/or channel-free, particularly preferably such that it can be arranged forming an arc.

3. Device (1) for guiding conduits according to one of the preceding claims,
**characterised in that**
the at least one carrier (2) comprises a plurality of web-like sections (4), which are arranged spaced apart from one another in the longitudinal direction of the band-like carrier (2), preferably 2 to 20, more preferably 3 to 15, and most preferably 5 to 12.

4. Device (1) for guiding conduits according to one of the preceding claims,
**characterised in that**
the at least one carrier (2) and the at least one web-like section (4) are firmly fixed to one another.

5. Device (1) for guiding conduits according to one of the preceding claims,
**characterised in that**
the at least one web-like section (4) comprises a plurality of openings (16) for the passage of conduits, whereas preferably 2 to 50 openings (16), more preferably 3 to 40 openings (16) and most preferably 4 to 15 openings (16) are provided.

6. Device (1) for guiding conduits according to one of the preceding claims,
**characterised in that**
the peripheral edges (22) of the at least one opening (16) are bevelled and preferably have an angle of 0.5° to 90° and particularly preferably of 5° to 20°.

7. Device (1) for guiding conduits according to one of the preceding claims,
**characterised in that**
the web-like sections (4) are formed at least partially interrupted, wherein the number of interruptions (18) preferably corresponds to the number of openings (16), through which the conduits are passable.

8. Device (1) for guiding conduits according to one of the preceding claims,
**characterised in that**
its material comprises at least one elastomer, preferably formed as a block copolymer and/or elastomer alloy.

9. Device (1) for guiding conduits according claim 8,
**characterised in that**
the material comprises at least one filling agent chosen from a pigment for colouring, an additive to improve material properties and a particle.

10. Use of a device (1) for guiding conduits according to one of claims 1-8 as a conduit guiding device between two or more holding elements (10a, 10b), machines and/or machine parts.

## Revendications

1. Dispositif (1) pour le guidage de conduites avec au moins un support (2) en forme de bande, qui peut être agencé en tant que liaison amovible entre deux éléments de support (10a, 10b), le dispositif (1) comprenant en outre au moins une section (4) en forme de traverse agencé sur le support (2) pour supporter de manière mobile des conduites, qui s'étend sensiblement transversalement à la direction longitudinale du support (2) et qui comprend au moins une ouverture (16) s'étendant dans la direction longitudinale du support (2) à travers la section (4), à travers laquelle au moins une conduite peut être guidée,
**caractérisé en ce que**
le au moins un support (2) et la au moins une section (4) en forme de traverse sont fermement fixés les uns aux autres par collage et/ou soudage.

2. Dispositif (1) pour le guidage de conduites selon l'une quelconque des revendications précédentes,
**caractérisé en ce que**
le au moins un support (2) est flexible et/ou pliable, de préférence sans articulation et/ou sans canal, de préférence de telle sorte qu'il peut être disposé formant un arc.

3. Dispositif (1) pour le guidage de conduites selon l'une quelconque des revendications précédentes,
**caractérisé en ce que**
le au moins un support (2) comporte une pluralité de sections (4) en forme de traverse, qui sont disposées dans la direction longitudinale du support (2) en forme de bande espacées l'une de l'autre, de préférence de 2 à 20, plus préférablement de 3 à 15 et le plus préférablement de 5 à 12.

4. Dispositif (1) pour le guidage de conduites selon l'une quelconque des revendications précédentes,
**caractérisé en ce que**
le au moins un support (2) et la au moins une section (4) en forme de traverse sont fermement fixés les uns aux autres.

5. Dispositif (1) pour le guidage de conduites selon l'une quelconque des revendications précédentes,
**caractérisé en ce que**
la au moins une section (4) en forme de traverse comprend une pluralité d'ouvertures (16) pour le passage de conduites ; de préférence de 2 à 50 ouvertures (16), plus préférablement 3 à 40 ouvertures (16), et le plus préférablement de 4 à 15 ouvertures (16) sont prévus.

6. Dispositif (1) pour le guidage de conduites selon l'une quelconque des revendications précédentes,
**caractérisé en ce que**
les bords périphériques (22) de la au moins une ouverture (16) sont chanfreinés, lesdits bords (22) ayant de préférence un angle de 0,5° à 90°, et plus préférablement un angle de 5° à 20°.

7. Dispositif (1) pour le guidage de conduites selon l'une quelconque des revendications précédentes,
**caractérisé en ce que**
les sections (4) en forme de traverse sont formées au moins partiellement interrompues, de préférence de sorte que le nombre d'interruptions (18) correspond au nombre d'ouvertures (16) prévues pour le passage des conduites.

8. Dispositif (1) pour le guidage de conduites selon l'une quelconque des revendications précédentes,
**caractérisé en ce que**
son matériau comprend au moins un élastomère, de préférence réalisé sous la forme d'un copolymère à blocs et/ou d'un alliage élastomère.

9. Dispositif (1) pour le guidage de conduites selon la revendication 8,
**caractérisé en ce que**
le matériau comprend au moins un matériel de remplissage choisi entre un pigment pour la coloration, un aditif pour l'amélioration des propriétés du matériau et une particule.

10. Utilisation d'un dispositif (1) pour le guidage de conduites selon l'une quelconque des revendications 1-8 en tant que dispositif de guidage de conduite entre deux ou plusieurs éléments de support (10a, 10b), machines et/ou parties de machine.
